# EUROPÄISCHE PATENTSCHRIFT

(11) **EP 1 147 930 B1**
(45) Veröffentlichungstag und Bekanntmachung des Hinweises auf die Patenterteilung: **05.12.2001**
(21) Anmeldenummer: 00106394.0
(22) Anmeldetag: 24.03.2000
(51) Int. Cl.: B60H 1/32, F25B 39/04

(54) **Kondensator für die Klimaanlage eines Kraftfahrzeuges**
Condenser for the airconditioning of a motor vehicle
Condenseur pour la climatisation de véhicule automobile

(43) Veröffentlichungstag der Anmeldung: 24.10.2001
(73) Patentinhaber: Modine Manufacturing Company, Racine, Wisconsin 53403-2552 (US)
(72) Erfinder: Altendorfer, Siegbert, 2700 Wiener Neustadt (AT); Operschall, Norbert, 2522 Oberwaltersdorf (AT)
(74) Vertreter: Wolter, Klaus-Dietrich

(56) Entgegenhaltungen:
- EP-A- 0 854 058
- US-A- 5 992 174
- PATENT ABSTRACTS OF JAPAN vol. 1997, no. 06, 30. Juni 1997 (1997-06-30) & JP 09 053867 A (CALSONIC CORP;NISSAN MOTOR CO LTD), 25. Februar 1997 (1997-02-25)
- BUURG R: "KONDENSATORMODUL FUR KRAFTFAHRZEUG-KLIMAANLAGEN" ATZ AUTOMOBILTECHNISCHE ZEITSCHRIFT,DE,FRANCKH'SCHE VERLAGSHANDLUNG. STUTTGART, Bd. 97, Nr. 5, 1. Mai 1995 (1995-05-01), Seiten 304-307, XP000511523 ISSN: 0001-2785

## Beschreibung

Die Erfindung betrifft einen Kondensator für die Klimaanlage eines Kraftfahrzeuges, der die Merkmale des Oberbegriffs des Anspruchs 1 aufweist.

Der Kondensator ist in der ATZ, Automobiltechnischen Zeitschrift, Bd. 97, Nr.5, vom 01.05.1995, auf den Seiten 304 - 307 beschrieben worden und er ist ähnlich dem Kondensator, der aus dem EP 669 506 B1 bekannt ist.

Der bekannte Kondensator weist den Nachteil auf, daß zum Herausnehmen des Trockners mit dem Filter ein Werkzeug oder dergleichen erforderlich ist. Ferner befinden sich der Trockner und der Filter in einem gemeinsamen Gehäuse, weshalb der Filter im Bedarfsfall nicht oder nur unter schwierigen Umständen einzeln auswechselbar ist. Darüber hinaus ist die Abdichtung des Gehäuses innerhalb des Sammlers zu aufwendig.

Die Aufgabe der Erfindung besteht darin, den beschriebenen Kondensator bezüglich Herstellung und Funktion weiter zu vereinfachen.

Erfindungsgemäße Lösung ergibt sich aus dem Kennzeichen des Anspruchs 1, im Zusammenhang mit dessen Oberbegriff. Die Erfindung führt zu folgenden Vorteilen. Nach dem Lösen des Deckels kann ohne Zuhilfenahme eines Werkzeuges das Gehäuse und der Gehäusekäfig entnommen werden, weil das Gehäuse am Deckel befestigt ist. Der Materialeinsatz für das Gehäuse und den Gehäusekäfig wurde wesentlich reduziert, weil die erwähnten Teile sich nicht bis zum Boden des Sammlers erstrecken.

Die erforderliche Abdichtung zwischen der Wand des Sammlers und dem Gehäusekäfig ist wesentlich vereinfacht worden. Ferner führt der unverbaute Abstand zwischen dem Gehäusekäfig und dem Boden des Sammlers zu besseren Strömungsbedingungen, insbesondere zu geringerem Druckverlust des dort bereits flüssigen Kältemittels.

Anspruch 2 sieht zur weiteren Vereinfachung vor, daß die Dichtung eine am Umfang des Gehäusekäfigs anvulkanisierte Dichtlippe ist, die allseits an der Wand des Sammlers anliegt. Das Gehäuse und der Gehäusekäfig sind vorzugsweise aus Kunststoff, so daß das Anvulkanisieren der Dichtlippe sehr einfach machbar ist. Das Kältemittel kann durch den Boden des Gehäusekäfigs austreten. Der Filter ist ähnlich einem Filtersieb, das gazeartig zwischen den Stäben des Gehäusekäfigs angeordnet ist.

Vorteilhaft ist auch, daß der Sammler ein Rohr ist, das im Bereich des Deckels ein Innengewinde aufweist, in das der Deckel eingeschraubt ist. Das Innengewinde sollte ein Feingewinde mit hohen Dichtungseigenschaften sein. In einem anderen Ausführungsbeispiel wird der Deckel in den Sammler eingesteckt und mit einem Sicherungsring gehalten. Der Deckel ist zusätzlich mit einer Ringnut versehen, in der sich ein O - Ring befindet, um die Abdichtung zur Atmosphäre weiter zu verbessern.

Die Verbindungen zwischen Gehäuse und Deckel sowie zwischen Gehäuse und Gehäusekäfig sind lösbare Schnapp - oder Rastverbindungen, die so ausgelegt wurden, daß sie sich beim Ein - und

Ausschrauben des Deckels nicht lösen können und daß sie auch Zugkräfte aufnehmen können, die beim Herausziehen des Deckels mit dem Gehäuse und dem Gehäusekäfig gegen den Widerstand der Dichtlippe auftreten. Das Herausziehen ist sehr einfach durch Angreifen an den frei zugänglichen Rand des Deckels möglich. Zwischen dem Deckel und dem Gehäuse ist eine Feder angeordnet, die sich am Kopf des Deckels und an einem beweglichen Element innerhalb des Gehäuses für das Trocknergranulat abstützt.

Die beschriebene lösbare Verbindung hat darüber hinaus den Vorteil, daß im Bedarfsfall der Trockner oder der Filter separat ausgetauscht werden können.

Weitere Merkmale und Wirkungen gehen aus der nachfolgenden Beschreibung eines Ausführungsbeispiels hervor, wozu auf die beiliegenden Zeichnungen Bezug genommen wird.
Fig. 1 zeigt eine teilweise geschnittene Ansicht auf den erfindungsgemäßen Kondensator;
Fig. 2 zeigt den Sammler als Einzelteil;
Fig. 3 zeigt den Deckel als Einzelteil;
Fig. 4 zeigt den Gehäusekäfig mit dem Filter;
Fig. 5 ist der Schnitt A - A in Fig. 4;
Fig. 6 zeigt den Sammler mit einem anderen Deckel;

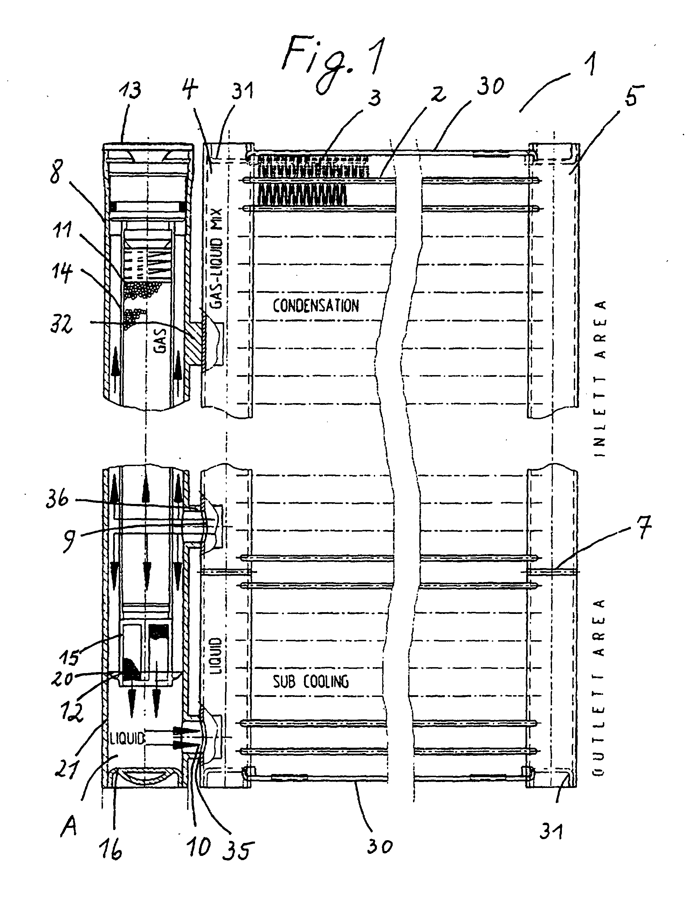

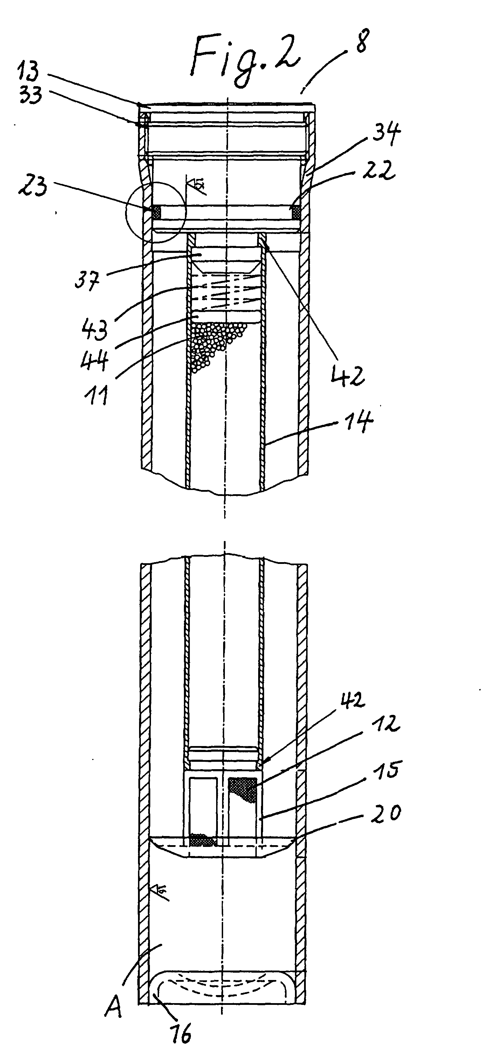

Der Kondensator, wie ihn die Fig. 1 zeigt, besteht aus Flachrohren 2, die gemeinsam mit den zwischen den Flachrohren angeordneten Wellrippen 3 den Rohr - Rippen - Block bilden. Dieser Block hat an seinem im Bild oberen und unteren Abschluß je ein Seitenteil 30, dessen Enden in nicht näher gezeigten Schlitzen in den Sammelrohren 4; 5 eingeführt und dort umgebogen wurden, wodurch der gesamte Kondensator 1 sehr kompakt zusammengehalten wird. Die Enden der Flachrohre 2 münden in gegenüber angeordneten Sammelrohren 4; 5 und sind dort in geeigneter Weise flüssigkeitsdicht in entsprechende nicht gezeigte Schlitze in den Sammelrohren 4, 5 eingesetzt worden, um später mittels Löten verbunden zu werden. Die Enden der Sammelrohre 4 und 5 weisen Verschlußkappen 31 auf. In den Sammelrohren 4; 5 sind Trennwände 7 angeordnet, die den Kondensator 1 in eine Kondensationszone und in eine Unterkühlungszone aufteilen. Der nicht gezeigte Einlaß für das Kältemittel könnte sich oben am Sammelrohr 5 befinden. Das Kältemittel strömt dann über einige der parallel angeordneten Flachrohre 2 zum Sammelrohr 4 - je nach dem an welcher Position sich weitere nicht gezeigte Trennwände 7 befinden - wieder zurück zum Sammelrohr 5, um dann, etwa am Ende der Kondensationszone über die Öffnung 9 in den Sammler 8 zu gelangen. Bei dem Sammler 8 handelt es sich um ein Rohr, das an seiner Längsseite einen oder mehrere Halter 32 besitzt, mit denen der Sammler 8 am Sammelrohr 4 fest angelötet werden kann. Die Halter 32 haben eine dem Sammelrohr 4 entsprechende Kontur, um eine optimale Verbindungsfläche auszubilden. Ferner weist der Sammler 8 kurze Stutzen 35 und 36 auf, die dem Anschluß an die Öffnungen 9; 10 dienen. Der bis hierher beschriebene Kondensator wird in einen Lötofen verbracht, um sämtliche Einzelteile miteinander zu verbinden und somit eine feste Einheit zu schaffen. Anschließend wird das Gehäuse 14, in dem sich ein Trocknergranulat 11 befindet, oben mit dem Deckel 13 mittels einer Schnappverbindung verbunden und auch unten mit dem Gehäusekäfig 15 mit einer identischen Verbindung zusammengefügt und gemeinsam - in einem Stück - in den Sammler 8 eingesetzt. Der Deckel 13 weist ein Außengewinde auf, um in ein korrespondierendes Innengewinde am oberen Ende des Sammlers 8 dicht eingeschraubt zu werden. (Fig. 2)

In Fig. 1 ist der Strömungsweg des Kältemittels innerhalb des Sammlers 8 eingezeichnet worden. Es kommt aus der Kondensationszone über die Öffnung 9, wobei der im wesentlichen gasförmige Anteil auch nach oben strömt Das Kältemittel durchströmt das Gehäuse 14 weil dessen Wandung eine nicht gezeigte Vielzahl von Durchbrüchen hat und kommt mit dem Trocknergranulat 11 in Kontakt, um dem Kältemittel Feuchtigkeit zu entziehen. Am unteren Ende des Gehäusekäfigs 15 ist eine Dichtlippe 20 angeordnet, die dafür sorgt, daß das Kältemittel nicht ohne gefiltert zu werden über die Öffnung 10 in die Unterkühlungszone gelangen kann. Um diese Aufgabe zu erfüllen, muß die Dichtlippe 20 nicht vollständig abdichten. Es reicht, wenn sie dem Kältemittel einen wesentlich größeren Widerstand entgegensetzt, als der Filter, um das Kältemittel zu zwingen, durch den Filter zu strömen.

Im Gehäusekäfig 15 ist ein engmaschiges Filtersieb 12 angeordnet. Dahindurch muß das Kältemittel strömen um zusätzlich gereinigt zu werden. Danach strömt das Kältemittel im überwiegend flüssigen Zustand durch die Flachrohre 2 der Unterkühlungszone, um über einen nicht gezeigten Auslaß am Sammelrohr 5 den Kondensator 1 zu verlassen.

Die Fig. 2 zeigt etwas deutlicher, daß der Deckel 13 eine Ringnut 22 aufweist, in der sich ein O - Ring 23 befindet, um zusätzliche Abdichtung zu erzielen. Es ist zu berücksichtigen, daß das Kältemittel unter sehr hohem Druck steht und das Entweichen, auch geringster Mengen, des Kältemittels verhindert werden muß. Dazu ist ferner vorgesehen, daß das Ende des Sammlers 8-zwar gering, aber deutlich erkennbar - aufgeweitet worden ist. Der aufgeweitete Abschnitt geht etwas tiefer in den Sammler 8 hinein, als das eingearbeitete Feingewinde 33. Dadurch bildet sich ein sich verjüngender Abschnitt 34 aus, der zu höherer Dichtigkeit führt, weil dadurch der O - Ring 23 beim Eindrehen des Deckels 13 ohne verklemmt oder verdreht zu werden, präzise in den Sammler 8 eingeführt werden kann und garantiert abdichtet. In der Fig. 2 wurden die Halter 32 und die Öffnungen 9; 10 nicht gezeichnet, weil sie einen von den Haltern 32 und den Öffnungen 9; 10 wegweisenden Schnitt durch den Sammler 8 aus Fig. 1 darstellt.

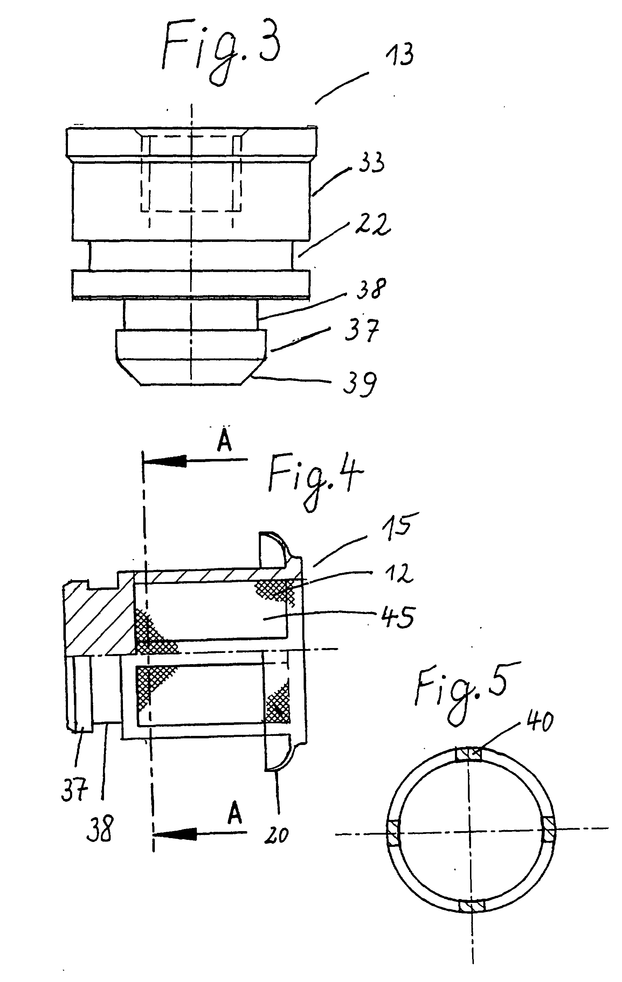

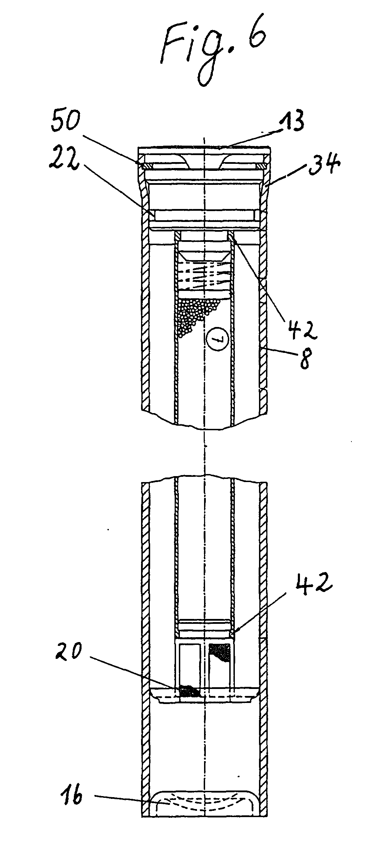

Die Fig. 3 zeigt Einzelheiten der in diesem Ausführungsbeispiel gewählten lösbaren Verbindung des Deckels 13 mit dem Gehäuse 14. Am Deckel 13 ist unten ein konusähnlicher Kopf 37 angeordnet, der eine Ringnut 38 besitzt und am der Ringnut 38 gegenüberliegenden Ende des Kopfes 37 den Konus 39 aufweist. Mit Hilfe des Konus 39 läßt sich der Kopf 37 sehr leicht in die Öffnung 41 des aus Kunststoff bestehenden Gehäuses 14 einsetzen. In der Endstellung, die in Fig. 2 erkennbar ist, ist der an der Öffnung 41 angeordnete Innenvorsprung 42 in der Ringnut 38 eingerastet. Die Verbindung zwischen Gehäusekäfig 15 und dem Gehäuse 14 ist identisch, wie die Fig. 2 in Verbindung mit der Fig. 4 zeigt. Bei der zuerst beschriebenen Verbindung hat es sich als vorteilhaft erwiesen, zwischen dem Kopf 37 und einem das Trocknergranulat 11 zurückhaltenden Element 44 (Siebscheibe oder dergleichen) ein Federelement 43 einzusetzen. (Fig. 2) Das Element 44 ist im Gehäuse 14 beweglich, so daß das Trocknergranulat 11 stetig zusammengedrückt wird. Dies hat den Vorteil, daß der das Kältemittel verschmutzende Abrieb des Trocknergranulats 11 wesentlich reduziert wird.

Die Fig. 4 und 5 zeigen den Aufbau des Gehäusekäfigs 15, der seitliche Durchbrüche 45 besitzt, die mittels des Filtersiebs 12 abgedeckt sind. Weil die Durchbrüche 45 relativ große Öffnungen darstellen, die für geringen Druckverlust sorgen, bleiben zwischen den Durchbrüchen 45 lediglich Stäbe 40 übrig. Der ebenfalls aus Kunststoff bestehende Gehäusekäfig 15 besitzt eine angespritzte Dichtlippe 20

In Fig. 6 ist der Deckel 13 nicht eingeschraubt sondern in den Sammler 8 lediglich eingesteckt worden. Die Position des Deckels 13 wird mit einem Sicherungsring 50 gewährleistet. Ansonsten sind keine Unterschiede gegenüber dem in Fig. 2 gezeigten Ausführungsbeispiel vorhanden.

## Patentansprüche

1. Kondensator (1) für die Klimaanlage eines Kraftfahrzeuges, bestehend aus einem von Kältemittel durchströmbaren Rohr (2) - Rippen (3) - Block, der beidseits jeweils mit einem Sammelrohr (4, 5) versehen ist, das/die mittels mindestens einer Trennwand (7) unterteilt ist/sind, um im Kondensator mindestens eine Kondensationszone und eine Unterkühlungszone auszubilden, wobei parallel zu einem der Sammelrohre (4) ein rohrförmiger Sammler (8) angeordnet ist, der mit dem Sammelrohr (4) mittels Öffnungen (9, 10) in Strömungsverbindung ist, derart, daß eine Öffnung (9) mit der Kondensationszone und eine andere Öffnung (10) mit der Unterkühlungszone verbunden ist, so daß das Kältemittel in den Sammler (8) eintreten und diesen durchströmen kann und dabei durch einen im Sammler (8) in einem durchströmbaren Gehäuse (14) angeordneten Trockner (11) und einen Filter (12) strömen muß, wobei der Sammler (8) einen lösbaren Deckel (13) aufweist, der an dem einen Ende des Gehäuses (14) befestigt ist, um den Trockner (11) mit dem Filter (12) im Bedarfsfall auszutauschen oder zu inspizieren,
**dadurch gekennzeichnet, daß**
eine lösbare Verbindung unmittelbar zwischen dem Deckel (13) und dem einen Ende des Gehäuses (14) vorgesehen ist, wobei der Deckel (13) einen Kopf (37) besitzt, zwischen dem und einer im Gehäuse (14) befindlichen beweglichen Siebscheibe (44) eine Feder (43) angeordnet ist, die auf den Trockner (11) drückt,
daß das andere Ende des Gehäuses (14) mittels einer Rast - oder Schnappverbindung an einem Gehäusekäfig (15) befestigt ist, in dem sich der Filter (12) befindet,
daß eine Dichtung (20) an dem Gehäusekäfig (15) angeordnet ist, der im Bereich zwischen den Öffnungen (9) und (10) endet
und daß zwischen dem Gehäusekäfig (15) und dem Boden (16) des Sammlers (8) ein unverbauter Abstand (A) vorhanden ist, der vom Kältemittel auf dem Weg in die Unterkühlungszone frei durchströmbar ist.

2. Kondensator nach Anspruch 1, **dadurch gekennzeichnet, daß** die Dichtung (20) eine am Umfang des Gehäusekäfigs (15) anvulkanisierte Dichtlippe ist, die allseits an der Wand (21) des Sammlers (8) anliegt.

3. Kondensator nach Anspruch 1, **dadurch gekennzeichnet, daß** der Sammler (8) ein Rohr ist, das im Bereich des Deckels (13) ein Innengewinde (33) aufweist, in das der Deckel (13) eingeschraubt ist.

4. Kondensator nach Anspruch 1, **dadurch gekennzeichnet, daß** der Deckel (13) in dem Sammler (8) eingesteckt und mit einem Sicherungsring (50) in Position gehalten ist.

5. Kondensator nach einem der vorstehenden Ansprüche, **dadurch gekennzeichnet, daß** der Deckel (13) eine Ringnut (22) zur Aufnahme eines O - Ringes (23) aufweist.

6. Kondensator nach den Ansprüchen 3; 4 oder 5, **dadurch gekennzeichnet, daß** das Rohr (Sammler 8) an dem Ende, an dem sich der Deckel (13) befindet, aufgeweitet ist, so daß sich an das Innengewinde (33) oder nach dem Sicherungsring (50) ein sich verjüngender Abschnitt (34) anschließt, über den, beim Eindrehen oder Einstecken des Deckels (13) dessen Ringnut (22) mit dem O - Ring (23) führbar ist.

7. Kondensator nach einem der vorstehenden Ansprüche, **dadurch gekennzeichnet, daß** der Deckel (13) und der Gehäusekäfig (15) einen konusartigen Kopf (37) mit einer Nut (38) aufweisen, daß der Kopf (37) des Deckels (13) an einem Ende des Gehäuses (14) in einen dort vorgesehenen Innenvorsprung (42) einrastet und daß der Kopf (37) des Gehäusekäfigs (15) am anderen Ende des Gehäuses (14) eingerastet ist.

8. Kondensator nach einem der vorstehenden Ansprüche, **dadurch gekennzeichnet, daß** das Gehäuse (14) und der Gehäusekäfig (15) Spritzgußteile aus Kunststoff sind, wobei das Gehäuse (14) eine Vielzahl kleiner Durchbrüche aufweist, um das granulatartige Trocknermaterial zurückzuhalten und der Gehäusekäfig (15) allseitig fensterartige Durchbrüche (45) besitzt, die mit einem Filtersieb (12) versehen sind, das an den zwischen den Durchbrüchen (45) angeordneten Stäben (40) befestigt ist.

## Claims

1. Condenser (1) for the air-conditioning system of a motor vehicle, consisting of a tube (2)/rib (3) block, through which refrigerant is capable of flowing and which is provided on each of the two sides with a header tube (4, 5) subdivided by at least one partition (7) to form in the condenser at least one condensation zone and one subcooling zone, there being arranged parallel to one of the header tubes (4) a tubular header (8) which is flowconnected to the header tube (4) by means of orifices (9, 10), in such a way that one orifice (9) is connected to the condensation zone and another orifice (10) to the subcooling zone, so that refrigerant can enter the header (8) and flow through the latter and at the same time must flow through a dryer (11), arranged in the header (8) in a throughflow housing (14), and through a filter (12), the header (8) having a releasable cover (13) which is fastened to one end of the housing (14), in order, as required, to exchange or inspect the dryer (11) together with the filter (12), **characterized in that** a releasable connection is provided directly between the cover (13) and the one end of the housing (14), the cover (13) possessing a head (37), between which and a movable screening disc (44) located in the housing (14) is arranged a spring (43) which presses onto the dryer (11), **in that** the other end of the housing (14) is fastened by means of a latching or snapping connection to a housing cage (15) in which the filter (12) is located, **in that** a seal (20) is arranged on the housing cage (15) and terminates in the region between the orifices (9) and (10), and **in that** between the housing cage (15) and the bottom (16) of the header (8) there is an unoccupied clearance (A), through which the refrigerant can flow freely on the way into the subcooling zone.

2. Condenser according to Claim 1, **characterized in that** the seal (20) is a sealing lip which is vulcanised on the circumference of the housing cage (15) and which rests on all sides against the wall (21) of the header (8).

3. Condenser according to Claim 1, **characterized in that** the header (8) is a tube which, in the region of the cover (13), has an internal thread (33) into which the cover (13) is screwed.

4. Condenser according to Claim 1, **characterized in that** the cover (13) is plugged in the header (8) and is held in position by means of a retaining ring (50).

5. Condenser according to one of the preceding claims, **characterized in that** the cover (13) has an annular groove (22) receiving an 0-ring (23).

6. Condenser according to Claims 3, 4 or 5, **characterized in that** the tube (header 8) is widened at the end at which the cover (13) is located, so that the internal thread (33) has adjoining it or the retaining ring (50) is followed by a narrowing portion (34), over which annular groove (22) of the cover (13), together with the 0-ring (23), can be guided when said cover is screwed in or plugged in.

7. Condenser according to one of the preceding claims, **characterized in that** the cover (13) and the housing cage (15) have a cone-like head (37) with a groove (38), **in that** the head (37) of the cover (13) is latched, at one end of the housing (14), into an inner projection (42) provided there, and **in that** the head (37) of the housing cage (15) is latched in at the other end of the housing (14).

8. Condenser according to one of the preceding claims, **characterized in that** the housing (14) and the housing cage (15) are plastic injection mouldings, the housing (14) having a multiplicity of small perforations, in order to retain the granulate-like dryer material, and the housing cage (15) possesses on all sides window-like perforations (45) provided with a filter screen (12) which is fastened to the bars (40) arranged between the perforations (45).

## Revendications

1. Condenseur (1) pour l'installation de climatisation d'un véhicule automobile, se composant d'un bloc tube (2) - nervures (3) pouvant être parcouru par un réfrigérant, lequel bloc est pourvu à chaque fois des deux côtés d'un tube collecteur (4, 5), qui est chaque fois divisé au moyen d'au moins une paroi de séparation (7), afin de créer dans le condenseur au moins une zone de condensation et une zone de sous-refroidissement, un collecteur tubulaire (8) étant disposé parallèlement à l'un des tubes collecteurs (4), lequel collecteur étant en communication fluidique avec le tube collecteur (4) par le biais d'ouvertures (9, 10), de telle sorte qu'une ouverture (9) soit connectée à la zone de condensation et qu'une autre ouverture (10) soit connectée à la zone de sous-refroidissement, de sorte que le réfrigérant puisse pénétrer dans le collecteur (8) et le traverser, et doive en l'occurrence s'écouler dans le collecteur (8) à travers un filtre (12) et un sécheur (11) disposé dans un boîtier (14) pouvant être parcouru par le courant, le collecteur (8) présentant un couvercle amovible (13) qui est fixé à une extrémité du boîtier (14) afin de remplacer le sécheur (11) avec le filtre (12) ou de l'inspecter en cas de besoin,
**caractérisé en ce qu'**il est prévu une connexion amovible directement entre le couvercle (13) et une extrémité du boîtier (14), le couvercle (13) possédant une tête (37), un ressort (43) étant disposé entre celle-ci et un disque de tamis (44) mobile disposé dans le boîtier (14), lequel ressort presse contre le sécheur (11),
**en ce que** l'autre extrémité du boîtier (14) est fixée au moyen d'une connexion par emboîtement ou par encliquetage sur une cage (15) du boîtier, dans laquelle se trouve le filtre (12),
**en ce qu'**un joint (20) est disposé sur la cage (15) du boîtier, laquelle se termine dans la région entre les ouvertures (9) et (10),
et **en ce qu'**entre la cage (15) du boîtier et le fond (16) du collecteur (8) est prévu un intervalle non obstrué (A), qui peut être librement parcouru par le réfrigérant en route dans la zone de sous-refroidissement.

2. Condenseur selon la revendication 1, **caractérisé en ce que** le joint (20) est une lèvre d'étanchéité vulcanisée sur la périphérie de la cage (15) du boîtier, laquelle lèvre repose de tous côtés contre la paroi (21) du collecteur (8).

3. Condenseur selon la revendication 1, **caractérisé en ce que** le collecteur (8) est un tube qui présente dans la région du couvercle (13) un filetage interne (33) dans lequel est vissé le couvercle (13).

4. Condenseur selon la revendication 1, **caractérisé en ce que** le couvercle (13) est enfoncé dans le collecteur (8) et est maintenu en place avec une bague d'arrêt (50).

5. Condenseur selon l'une quelconque des revendications précédentes, **caractérisé en ce que** le couvercle (13) présente une rainure annulaire (22) pour recevoir un joint torique (23).

6. Condenseur selon l'une quelconque des revendications 3, 4 ou 5, **caractérisé en ce que** le tube (collecteur 8) est élargi à l'extrémité où se trouve le couvercle (13), de sorte qu'une section se rétrécissant (34) se raccorde au filetage interne (33) ou après la bague d'arrêt (50), le long de laquelle la rainure annulaire (22) du couvercle peut être guidée avec le joint torique (23) lors du vissage ou de l'enfoncement du couvercle (13).

7. Condenseur selon l'une quelconque des revendications précédentes, **caractérisé en ce que** le couvercle (13) et la cage (15) du boîtier présentent une tête conique (37) avec une rainure (38), **en ce que** la tête (37) du couvercle (13) s'enclenche à une extrémité du boîtier (14) dans une saillie interne (42) prévue à cet endroit, et **en ce que** la tête (37) de la cage (15) du boîtier est enclenchée à l'autre extrémité du boîtier (14).

8. Condenseur selon l'une quelconque des revendications précédentes, **caractérisé en ce que** le boîtier (14) et la cage (15) du boîtier sont des pièces moulées par injection de plastique, le boîtier (14) présentant une pluralité de petites interruptions, afin de retenir le matériau granulaire du sécheur et la cage (15) du boîtier possédant des interruptions (45) de tous les côtés en forme de fenêtres, qui sont pourvues d'un tamis filtrant (12), qui est fixé aux barres (40) disposées entre les interruptions (45).
